# EUROPÄISCHE PATENTSCHRIFT

(11) **EP 4 124 232 B1**
(45) Veröffentlichungstag und Bekanntmachung des Hinweises auf die Patenterteilung: **28.01.2026**
(21) Anmeldenummer: 22167051.6
(22) Anmeldetag: 07.04.2022
(51) Int. Cl.: A01D 41/14

(54) **LANDWIRTSCHAFTLICHE MASCHINE MIT SCHWINGUNGSGEDÄMPFTEN VORSATZGERÄT**
AGRICULTURAL MACHINE WITH VIBRATION-DAMPED ATTACHMENT
MACHINE AGRICOLE POURVUE D'ACCESSOIRE AMORTISSEUR DE VIBRATIONS

(30) Priorität: 30.07.2021 DE 102021119897
(43) Veröffentlichungstag der Anmeldung: 01.02.2023
(73) Patentinhaber: CLAAS Selbstfahrende Erntemaschinen GmbH, 33428 Harsewinkel (DE)
(72) Erfinder: Beschorn, Udo, 33428 Harsewinkel (DE); Wielenberg, Andreas, 32049 Herford (DE); Füchtling, Christian, 48317 Drenstein Rinkerode (DE); Gehrmann, Marcus, 33428 Marienfeld (DE)
(74) Vertreter: CLAAS Gruppe

(56) Entgegenhaltungen:
- US-A1- 2011 283 673
- US-A1- 2015 033 692
- US-A1- 2021 153 434
- US-B2- 10 278 330
- US-B2- 10 321 629
- US-B2- 10 531 607

## Beschreibung

Landwirtschaftliche Maschine mit schwingungsgedämpftem Vorsatzgerät Die vorliegende Erfindung betrifft eine landwirtschaftliche Arbeitsmaschine mit einem Trägerfahrzeug, zum Beispiel einen Mähdrescher oder Feldhäcksler, und einem daran montierten Vorsatzgerät, typischerweise einem Schneidwerk (siehe US 2015/033692 A1). Ein solches Schneidwerk ist im Allgemeinen mittig an einem Einzug des Trägerfahrzeugs aufgehängt und um eine in Fahrtrichtung des Trägerfahrzeugs orientierte Achse schwenkbar, damit das Schneidwerk nicht jeder Rollbewegung um diese Achse folgen muss, die das Trägerfahrzeug beim Überfahren von Bodenunebenheiten ausführt, so dass es trotz kurzfristigen Hin- und Herschwankens des Trägerfahrzeugs eine im Wesentlichen zum Boden parallele Orientierung beibehalten kann, gleichzeitig aber die Rollneigung des Schneidwerks sich Bodenunebenheiten anpassen kann, ohne dass das Trägerfahrzeug eine entsprechende Rollbewegung ausführen muss. Um eine solche Verstellung des Schneidwerks zu ermöglichen, ist zwischen Trägerfahrzeug und Vorsatzgerät ein Schwenkantrieb vorgesehen.

Aus DE 10 2010 021 133 A1 ist eine Arbeitsmaschine bekannt, bei der beiderseits der Achse Stützräder mit einem Rahmen des Schneidwerks über reversierbar nachgiebige Träger verbunden sind. Wenn eines dieser Stützräder auf eine Bodenerhebung rollt und dabei nach oben ausgelenkt wird, dann hat das hohe Trägheitsmoment des Schneidwerks zur Folge, dass im Wesentlichen nur der Träger dieses einen Stützrades nachgibt und die Rollneigung des Schneidwerks unverändert bleibt. Während dies bei kleinen Erhebungen durchaus sinnvoll ist, tritt bei größeren das Problem auf, dass wenn die Rollneigung nicht angepasst wird, das Schneidwerk an die Erhebung anstoßen kann. Einer Anpassung der Rollneigung wirkt aber nicht nur das Trägheitsmoment des Schneidwerks entgegen, sondern auch der Widerstand des Stützradträgers an einer von der Bodenerhebung abgewandten Seite des Schneidwerks.

Um diesem Nachteil abzuhelfen, wird erfindungsgemäß vorgeschlagen, dass bei einer landwirtschaftlichen Maschine, die ein Trägerfahrzeug und ein Vorsatzgerät umfasst, das am Trägerfahrzeug um eine in Fahrtrichtung des Trägerfahrzeugs verlaufende Achse schwenkbeweglich geführt ist, wobei rechts und links der Achse jeweils ein Stützrad mit dem Vorsatzgerät über einen gedämpft stauchbaren Arm verbunden ist, eine Steuerschaltung eingerichtet ist, zu entscheiden, ob eine Schwenkbewegung des Vorsatzgeräts um die Achse erwünscht ist oder nicht und in dem Fall, dass die Schwenkbewegung erwünscht ist, denjenigen der Arme, der durch die Schwenkbewegung gestaucht wird, aus einem stark gedämpft stauchbaren Zustand in einen im wesentlichen ungedämpften Zustand umzuschalten.

Wenn an einer Seite des Vorsatzgeräts ein Arm in Kontakt mit einer Bodenerhebung gestaucht wird, dann kann die Steuerschaltung die dadurch angetriebene Schwenkbewegung als erwünscht behandeln, indem sie den gegenüberliegenden Arm in den im wesentlichen ungedämpften Zustand umschaltet. So kann dieser andere Arm dem Drehmoment, dass der von dem in Kontakt mit der Bodenerhebung gestauchten Arm auf das Vorsatzgerät ausgeübt wird, keinen Widerstand mehr entgegensetzen, was eine beschleunigte Anpassung der Rollneigung ermöglicht.

Die Stützräder sollen im Betrieb nicht oder allenfalls zu einem geringen Teil das Gewicht des Vorsatzgeräts tragen. Deshalb ist das Drehmoment, das ein Arm auf das Vorsatzgerät ausüben kann, normalerweise nicht ausreichend, um eine schnelle Anpassung der Rollneigung zu bewirken. Um dies zu erreichen, ist daher vorzugsweise wenigstens ein Stellglied vorgesehen, das an dem Trägerfahrzeug und dem Vorsatzgerät angreift.

Die Steuerschaltung ist dann zweckmäßigerweise eingerichtet, eine von dem Stellglied angetriebene Schwenkbewegung des Vorsatzgeräts um die Achse als erwünschte Schwenkbewegung zu behandeln, d.h. in einem Zustand, in dem das Stellglied eine Schwenkbewegung des Vorsatzgeräts um die Achse antreibt, denjenigen der Arme in den in den im wesentlichen ungedämpften Zustand umzuschalten, der durch die Schwenkbewegung gestaucht wird, und so ein schnelleres Schwenken zu ermöglichen. Dieselbe Steuerschaltung kann auch das Stellglied selber steuern.

Indem die Dämpfung im Laufe der Abwärtsbewegung vom im wesentlichen ungedämpften auf den stark gedämpften Zustand umgeschaltet wird, kann zunächst ein schnelles Schwenken und damit eine schnelle Rückkehr in die Nähe einer gewünschten Rollneigung erreicht werden; wenn dies geschehen ist, kann durch stärkeres Dämpfen ein Bodenkontakt des Vorsatzgeräts vermieden oder zumindest auf eine unschädliche Geschwindigkeit verlangsamt werden.

Unterschiedliche Werte der Dämpfung sind insbesondere dadurch realisierbar, dass jeder Arm einen Stellzylinder umfasst, und dass eine Kammer des Stellzylinders mit einem Reservoir über einen Hydraulikkreis mit schaltbarem Strömungswiderstand verbunden ist.

Vorzugsweise ist der Stellzylinder ein einfach wirkender Stellzylinder.

Der Arm kann ein Armglied umfassen, das an einem ersten Ende an das Vorsatzgerät angelenkt ist und an einem zweiten Ende eine Achse des Stützrads definiert. Zum Verstellen des Arms kann der Stellzylinder an das Armglied und an das Vorsatzgerät angelenkt sein.

Der Hydraulikkreis kann eine Drosselstelle und ein zu der Drosselstelle paralleles Schaltventil umfassen; so kann durch Schließen des Schaltventils ein hoher und durch Öffnen ein niedriger Wert der Dämpfung realisiert werden.

Ein offener Zustand des Schaltventils könnte grundsätzlich genutzt werden, um sowohl, wenn sich eine Seite des Vorsatzgeräts abwärts bewegt, ein schnelles Nachgeben eines Arms an dieser Seite, als auch bei einer Aufwärtsbewegung ein schnelles Ausstrecken des Arms zu erreichen. Bevorzugt ist allerdings, dass der Hydraulikkreis ferner ein zu der Drosselstelle paralleles Rückschlagventil aufweist, um ein schnelles Ausstrecken bei einer Aufwärtsbewegung zu realisieren; so kann das Bewegungsverhalten des Vorsatzgeräts für beide Situationen unabhängig optimiert werden.

Die Drosselstelle kann ein durch den Druck an seinem dem Stellzylinder zugewandten Anschluss gesteuertes Druckregelventil umfassen. So ist eine hohe und - in den Phasen der Bewegung, in denen nicht das Schaltventil betätigt wird - von der momentanen Auslenkung des Vorsatzgeräts unabhängige Dämpfung realisierbar.

Jedem Arm ist vorzugsweise ein Bodenabstandsmesser zugeordnet, um die Dämpfung in Abhängigkeit von einem von diesem gemessenen Bodenabstand oder einer Differenz zwischen von den Bodenabstandsmessern beiderseits der Achse gemessenen Bodenabständen zu steuern. Die Bodenabstandsmesser können jeweils einen als sich von dem Vorsatzgerät bodenwärts erstreckenden und im Kontakt mit dem Boden ausgelenkten oder verformten Drahtbügel umfassen, wobei die Auslenkung oder Biegespannung des Drahtbügels erfasst wird, um ein für den Bodenabstand repräsentatives Messsignal zu liefern.

Das Schaltventil im Hydraulikkreis eines der Arme ist vorzugsweise eingerichtet, bei Überschreitung eines ersten Schwellwerts des vom dem Arm zugeordneten Bodenabstandsmesser gemessenen Bodenabstands oder der Differenz zwischen dem vom dem Arm zugeordneten Bodenabstandsmesser gemessenen Bodenabstand und einem von einem Bodenabstandsmesser auf der gegenüberliegenden Seite der Achse gemessenen Bodenabstand zu öffnen und bei Unterschreitung eines zweiten, niedrigeren Schwellwerts des Bodenabstands oder der Differenz zu schließen. Das Öffnen im Laufe einer Aufwärtsbewegung bleibt auf die Dämpfung im Wesentlichen ohne Wirkung, wenn in diesem Fall dem Hydraulikfluid der Weg über das Rückschlagventil offensteht.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht einer erfindungsgemäßen landwirtschaftlichen Maschine von vorn;
- Fig. 2: eine schematische Seitenansicht eines an einem Trägerfahrzeug montierten Vorsatzgeräts;
- Fig. 3: eine Ansicht eines stauchbaren Arms mit einem Stützrad; und
- Fig. 4: ein Diagramm eines Hydraulikkreises, der einen Stellzylinder einem gedämpften Arm mit einem Reservoir verbindet.

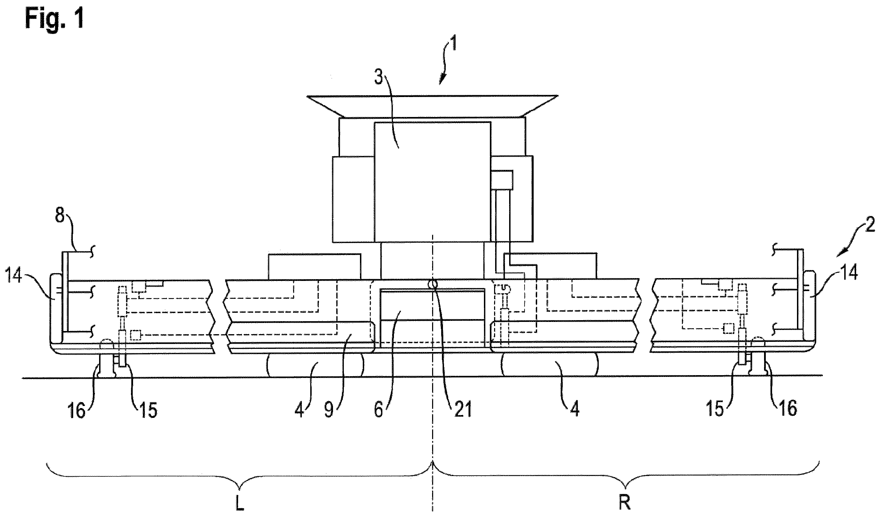

Fig. 1 zeigt eine schematische Vorderansicht eines Mähdreschers, der als Trägerfahrzeug 1 für ein Vorsatzgerät 2 wie einen Erntevorsatz fungiert. Die Breite des Vorsatzgeräts 2 ist ein Mehrfaches der Breite des Trägerfahrzeugs 1. Das Vorsatzgerät 2 verdeckt einen unteren Frontbereich des Trägerfahrzeugs 1, so dass von letzterem im Wesentlichen nur eine Fahrerkabine 3 oberhalb des Vorsatzgeräts 2 sowie Teile seiner Vorderräder 4 darunter zu sehen sind. Vorsatzgerät 2 und Trägerfahrzeug 1 sind über einen Schrägförderer 5 verbunden, von dem in Fig. 1 nur eine Einlassöffnung 6 an einer Rückwand des Vorsatzgeräts 2 zu sehen ist. Das Vorsatzgerät 2 ist relativ zum Trägerfahrzeug 1 um eine sich in Fahrtrichtung erstreckende Achse 21 schwenkbar; die Achse definiert somit eine linke und eine rechte Seite L, R des Vorsatzgeräts 2, die im Rahmen einer Rollbewegung um die Achse 21 sich vertikal gegenphasig auf und ab bewegen, aber auch gleichphasig auf und ab federn können. Eine Haspel 8 und eine Querförderschnecke 9 sind in Fig. 1 jeweils in der Mitte unterbrochen dargestellt.

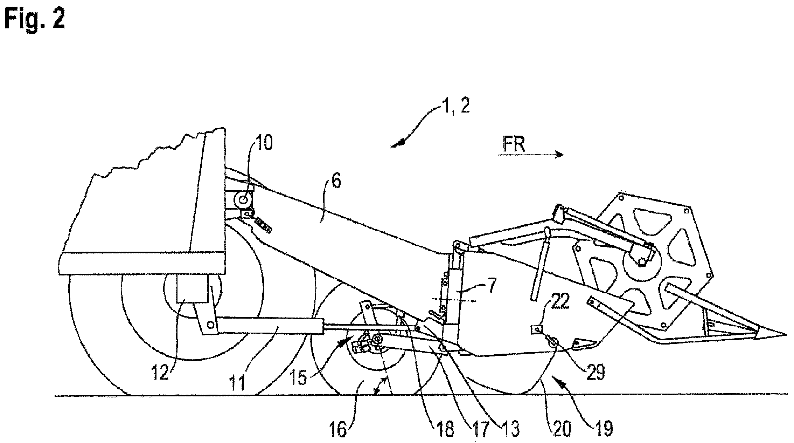

Fig. 2 zeigt detaillierter den Aufbau des Vorsatzgeräts 2 und seine Verbindung zum Trägerfahrzeug 1. Ein Rahmen 7 des Schrägförderers 5 ist mit der Karosserie des Trägerfahrzeugs 1 über ein Gelenk 10 schwenkbar verbunden. Über den Schrägförderer 5 trägt das Trägerfahrzeug 1 den überwiegenden Teil des Gewichts des Vorsatzgeräts 2. Zwei Stellglieder 11 erstrecken sich zwischen karosserieseitigen Angriffspunkten 12 an der Karosserie unterhalb des Gelenks 10 und vorsatzseitigen Angriffspunkten 13 die an der Rückwand des Vorsatzgeräts 2 jeweils zu unteren Ecken der Einlassöffnung 6 benachbart sind. So kann durch gleichzeitiges gleichsinniges Betätigen beider Stellglieder 11 das Vorsatzgerät 2 als Ganzes auf und ab bewegt werden, während das Ausstrecken oder Einziehen jeweils eines der Stellglieder 11 bei Beibehaltung der Länge des anderen oder eine gegenphasige Betätigung der beiden Stellglieder 11 eine Rollbewegung des Vorsatzgeräts 2 antreiben oder ihr entgegenwirken kann.

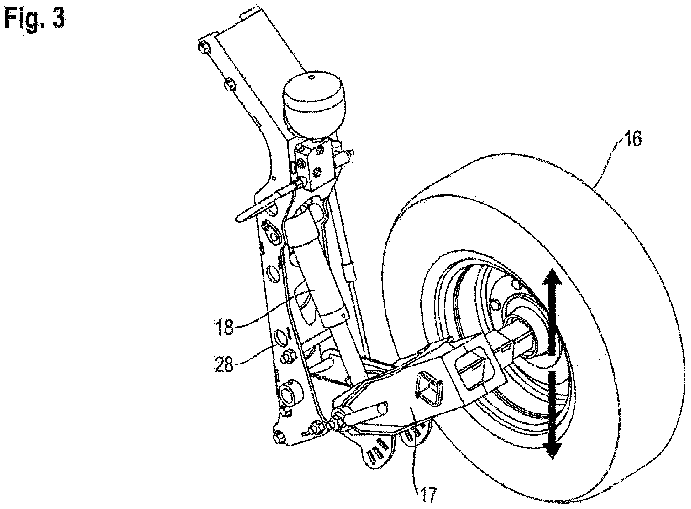

Benachbart zu Seitenwangen 14 an den seitlichen Enden des Vorsatzgeräts 2 sind an dessen Unterseite gedämpfte stauchbare Arme 15 montiert. Wie im Detail in Fig. 3 gezeigt, ist ein bodenberührendes Ende der Arme 15 jeweils durch ein Stützrad 16 gebildet; das Stützrad 16 ist über ein in einer in etwa horizontalen Stellung gezeigtes Armglied 17 an ein Beschlagteil 28 angelenkt. Das Beschlagteil 28 ist vorgesehen, um seinerseits an der Rückwand des Vorsatzgeräts 2 so montiert zu werden, dass das am Beschlagteil 28 angelenkte Ende des Armglieds 17 wie in Fig. 2 gezeigt etwa in Bodenhöhe des Vorsatzgeräts 2 zu liegen kommt. Die Neigung des Armglieds 17 ist durch einen Stellzylinder 18 einstellbar, der an dem Armglied 17 und an einem oberen Bereich des Beschlagteils 28 angreift.

An jeder Seitenwange 14 ist ein Bodenabstandsmesser 19 vorgesehen. Der Bodenabstandsmesser 19 umfasst einen Drahtbügel 20, der um eine Achse 29 schwenkbar an der Seitenwange 14 gelagert ist, und einen Sensor 22 zum Erfassen des für den Abstand zwischen der Seitenwange 14 und dem Boden repräsentativen Drehwinkels des Drahtbügels 20 um die Achse 29.

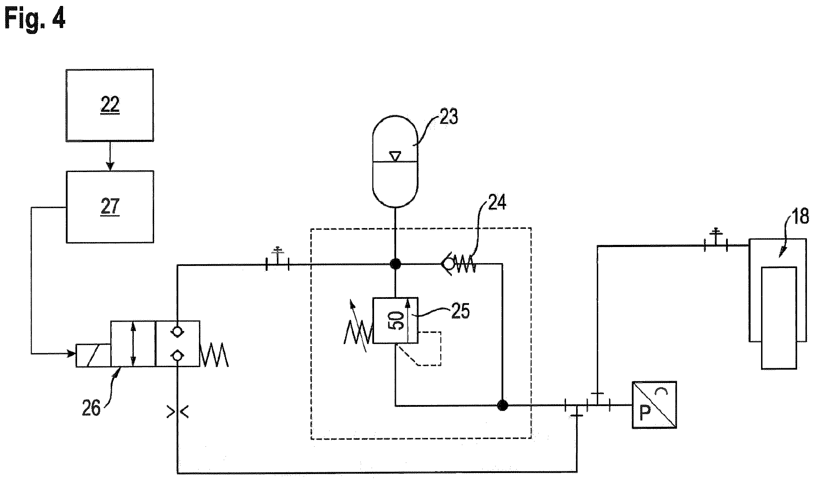

Wie in Fig. 4 gezeigt, ist eine Arbeitskammer des Stellzylinders 18 eines der Arme 15 mit einem Druckreservoir 23 über einen Hydraulikkreis verbunden, in dem ein in Richtung vom Stellzylinder 18 zum Druckreservoir 23 sperrendes Rückschlagventil 24 und eine Drosselstelle, hier in Form eines Druckregelventils 25, parallel geschaltet sind. Ein Einlass und ein Steuereingang des Druckregelventils 25 sind dem Stellzylinder 18 zugewandt, so dass, wenn der Druck in diesem den des Druckreservoirs um mehr als einen am Druckregelventil 25 eingestellten Schwellenwert übersteigt, Hydraulikfluid aus der Arbeitskammer zum Druckreservoir 23 abfließt und dabei in dem Druckregelventil 25 einen Druckabfall erfährt. Wenn das Vorsatzgerät 2 zu einer Schwingbewegung angeregt worden ist, kann so der Arm 15 eine Abwärtsbewegung der von ihm unterstützten Seite des Vorsatzgeräts 2 dämpfen und verlangsamen.

Wenn sich diese Seite des Vorsatzgeräts 2 wieder aufwärts bewegt, ist der Arm 15 entlastet, und der Druck in der Arbeitskammer des Stellzylinders 18 ist so gering, dass Hydraulikfluid vom Druckreservoir 23 über das Rückschlagventil 24 in die Arbeitskammer strömt und den Arm 15 ausfährt. Die Flussrate durch das Rückschlagventil 24 kann so hoch sein, dass das Stützrad 16 des Arms 15 während der Aufwärtsbewegung den Bodenkontakt nie verliert; doch auch bei einer geringeren Flussrate und eventuell daraus resultierendem Verlust des Bodenkontakts in der Aufwärtsbewegung wird dieser in einer frühen Phase der darauffolgenden Abwärtsbewegung wieder hergestellt. Wenn aber die Abwärtsbewegung von Anfang stark gedämpft wird, dann kann sie noch vor Erreichen einer Gleichgewichtsstellung zum Erliegen kommen oder zumindest so stark verlangsamt werden, dass vor Erreichen der Gleichgewichtsstellung das Vorsatzgerät durch Überfahren einer Bodenunebenheit erneut zum Schwingen angeregt wird.

Auch in dem Fall dass eine Schwenkbewegung des Vorsatzgeräts 2 gezielt mit Hilfe der Stellglieder 11 angetrieben wird, um eine als fehlerhaft erkannte Rollneigung zu korrigieren, ist eine starke Dämpfung des Arms 15 störend, weil sie das Erreichen der gewünschten Rollneigung verzögert.

Um dies zu vermeiden, ist als weitere Komponente des Hydraulikkreises ein Schaltventil 26 parallel zum Druckregelventil 25 und dem Rückschlagventil 24 zwischen dem Stellzylinder 18 und dem Druckreservoir 23 vorgesehen. Eine Steuerschaltung 27 steuert den Betriebszustand, offen oder geschlossen, des Schaltventils 26 anhand von Messdaten der Bodenabstandsmesser 19.

Die Steuerung des einem der Arme 15 zugeordneten Schaltventils 26 kann auf Messdaten allein desjenigen Bodenabstandsmessers 19 basieren, das auf derselben Seite des Vorsatzgeräts 2 angeordnet ist wie das Schaltventil 26 selber. Wenn die von dem Bodenabstandsmesser 19 gemessene Höhe eine Schwelle h1 oberhalb einer Gleichgewichtshöhe h0 überschreitet, dann öffnet die Steuerschaltung 26 das Schaltventil 26. Da gleichzeitig Hydraulikfluid bereits über das Rückschlagventil in die Arbeitskammer des Stellzylinders 18 strömt, hat dieses Öffnen auf den vom Hydraulikfluid zu überwindenden Strömungswiderstand wenig Einfluss. Die Aufwärtsbewegung ist daher unabhängig von der Stellung des Schaltventils 26 nicht nennenswert gedämpft; deswegen sind Auslenkungen nach oben bis weit über die Gleichgewichtsstellung möglich, und auch die nachfolgende Abwärtsbewegung bleibt zunächst nur marginal gedämpft.

Erst wenn im Laufe einer nachfolgenden Abwärtsbewegung die vom Bodenabstandsmesser 19 gemessene Höhe eine zweite Schwelle h2 zwischen h0 und h1 unterschreitet, dann schließt die Steuerschaltung 27 das Schaltventil 26. Ein Rückfluss von Hydraulikfluid vom Stellzylinder 18 zum Druckreservoir 23 kann nun nur noch über das Druckregelventil 25 erfolgen, so dass von nun an die weitere Bewegung stark gedämpft ist. So ist gewährleistet, dass wenn durch die Dämpfung die Abwärtsbewegung zum Stillstand kommt, die Höhe, in der dies geschieht, nicht weit von der Gleichgewichtshöhe h0 entfernt ist. Es genügt daher eine geringe Leistung der Stellglieder 11, um die Gleichgewichtshöhe h0 wieder einzustellen

Da der Öffnungszustand des Schaltventils 26 auf die Aufwärtsbewegung kaum Einfluss hat, könnte der die erste Schwelle h1 auch gleich h2 gesetzt werden. Eine Differenz zwischen beiden vorzusehen ist jedoch nützlich, um ein häufiges Schalten des Ventils 26 zu vermeiden, wenn die Höhe in der Umgebung von h1 und h2 langsam und mit geringer Amplitude schwankt.

Bei der obigen Beschreibung wurde jeweils nur eine Seite des Vorsatzgeräts 2 und der dort angeordnete Arm 15 betrachtet. Da die beschriebene Steuerung des Schaltventils 26 in Abhängigkeit von der Höhe an beiden Seiten L. R des Vorsatzgeräts 2 in gleicher Weise stattfindet, kann nicht nur eine Rollschwingung des Vorsatzgeräts 2 gedämpft werden, sondern auch eine Oszillation des gesamten Vorsatzgeräts 2 in der Vertikalen.

Einer zweiten Ausgestaltung zufolge wertet die Steuerschaltung 27 Messdaten von Bodenabstandsmessern 19 an beiden Seiten des Vorsatzgeräts aus. In diesem Fall ist es nicht notwendig, eine Gleichgewichtshöhe h0 zu bestimmen und die erste und zweite Schwelle h1, h2 in einem geeigneten Abstand von dieser Gleichgewichtshöhe h0 festzulegen; es genügt, die Differenz zwischen rechts und links von der Mitte des Vorsatzgeräts gemessenen Höhen hL, hR zu bestimmen: Überschreitet diese Differenz eine vorgegebenen Betrag d1, z.B. entsprechend einer Rollneigung des Vorsatzgeräts 2 gegen die Horizontale von 0,15° oder 0, 2°, dann öffnet die Steuereinheit 27 das Schaltventil 26 an der jeweils höheren Seite L oder R des Vorsatzgeräts 2, und schließt es wieder, wenn die Rollneigung gegen die Horizontale auf einen niedrigeren Wert d2, z.B. auf unter 0,1°, abgenommen hat. So ist die Rollbewegung des Vorsatzgeräts 2 immer nur dann stark gedämpft, wenn es sich in der Nähe der Horizontalen befindet, und ein längeres Verweilen des Vorsatzgeräts in einer Schrägstellung mit mehr als 0,1° Neigung kann verhindert werden.

Die Steuerung anhand der Höhe und anhand der Höhendifferenz können miteinander kombiniert werden.

Die oben beschriebene Steuerung des Schaltventils 26 anhand von Messwerten der Bodenabstandsmesser 19 kann mit der Ansteuerung der Stellglieder 11 verknüpft sein: so kann die Steuerschaltung 27 anhand der Messwerte der Bodenabstandsmesser 19 erkennen, ob die Rollneigung des Vorsatzgeräts in einem vorgegebenen Sollbereich liegt, und, falls dies nicht der Fall ist, entscheiden, in welche Richtung das Vorsatzgerät 2 um die Achse 21 geschwenkt werden muss, um die Rollneigung in ihren Sollbereich zurückzuführen, und welches der beiden Stellglieder 11 dafür ausgefahren und welches eingezogen werden muss. Wenn und solange die Steuerschaltung 27 ein oder beide Stellglieder 11 ansteuert, um eine Rollbewegung anzutreiben, versetzt sie gleichzeitig an derjenigen Seite des Vorsatzgeräts, die durch diese Rollbewegung abgesenkt wird, den Arm 15 in den im Wesentlichen ungedämpften Zustand, um so den Widerstand gegen die Rollbewegung zu minimieren.

Wenn oder kurz bevor das Vorsatzgerät 2 die gewünschte Rollneigung erreicht hat, beendet die Steuerschaltung 27 die Betätigung der Stellglieder 11. Gleichzeitig oder mit einer kurzen Verzögerung schließt die Steuerschaltung 27 das Schaltventil 26. Der Schließzeitpunkt kann unter Berücksichtigung der bei geschlossenem Schaltventil 26 durch das Druckregelventil 25 realisierten Dämpfung so gewählt werden, dass die Schwenkbewegung des Vorsatzgeräts 2 bei der gewünschten Rollneigung zum Erliegen kommt.

### Bezugszeichen

- 1: Trägerfahrzeug
- 2: Vorsatzgerät
- 3: Fahrerkabine
- 4: Vorderrad
- 5: Schrägförderer
- 6: Einlassöffnung
- 7: Rahmen
- 8: Haspel
- 9: Querförderschnecke
- 10: Gelenk
- 11: Stellglied
- 12: Angriffspunkt
- 13: Angriffspunkt
- 14: Seitenwange
- 15: Arm
- 16: Rad
- 17: Armglied
- 18: Stellzylinder
- 19: Bodenabstandsmesser
- 20: Drahtbügel
- 21: Achse
- 22: Sensor
- 23: Druckreservoir
- 24: Rückschlagventil
- 25: Druckregelventil
- 26: Schaltventil
- 27: Steuerschaltung
- 28: Beschlagtei
- 29: Achsel

## Patentansprüche

1. Landwirtschaftliche Maschine, umfassend ein Trägerfahrzeug (1) und ein Vorsatzgerät (2), das am Trägerfahrzeug (1) um eine in Fahrtrichtung des Trägerfahrzeugs (1) verlaufende Achse (21) schwenkbeweglich geführt ist, wobei rechts und links der Achse (21) jeweils ein Stützrad (16) mit dem Vorsatzgerät (2) über einen gedämpft stauchbaren Arm (15) verbunden ist, **dadurch gekennzeichnet, dass** eine Steuerschaltung (27) eingerichtet ist, zu entscheiden, ob eine Schwenkbewegung des Vorsatzgeräts (2) um die Achse (21) erwünscht ist oder nicht und in dem Fall, dass die Schwenkbewegung erwünscht ist, denjenigen der Arme (15), der durch die Schwenkbewegung gestaucht wird, aus einem stark gedämpft stauchbaren Zustand in einen im wesentlichen ungedämpften Zustand umzuschalten.

2. Landwirtschaftliche Maschine nach Anspruch 1, **dadurch gekennzeichnet, dass** die Steuerschaltung (27) eingerichtet ist, wenn einer der Arme (15) im stark gedämpft stauchbaren Zustand gestaucht wird, eine von diesem Arm angetriebene Schwenkbewegung als erwünschte Schwenkbewegung zu behandeln. den anderen Arm (15) in den im wesentlichen ungedämpften Zustand umzuschalten.

3. Landwirtschaftliche Maschine nach Anspruch 1 oder 2, **gekennzeichnet durch** ein Stellglied (11), das an dem Trägerfahrzeug (1) und dem Vorsatzgerät (2) angreift, um eine Schwenkbewegung um die Achse (21) zwischen dem Trägerfahrzeug (1) und dem Vorsatzgerät (2) anzutreiben.

4. Landwirtschaftliche Maschine nach Anspruch 3, **dadurch gekennzeichnet, dass** die Steuerschaltung (27) eingerichtet ist, eine von dem Stellglied (11) angetriebene Schwenkbewegung des Vorsatzgeräts (2) um die Achse (21) als erwünschte Schwenkbewegung zu behandeln.

5. Landwirtschaftliche Maschine nach einem der vorhergehenden Ansprüche, **dadurch gekennzeichnet, dass** die Steuerschaltung (27) eingerichtet ist, die Dämpfung eines Arms (15) im Laufe eines Stauchvorgangs desselben vom im wesentlichen ungedämpften auf den stark gedämpften Zustand umzuschalten.

6. Landwirtschaftliche Maschine nach einem der vorhergehenden Ansprüche, **dadurch gekennzeichnet, dass** jeder Arm (15) einen Stellzylinder (18) umfasst, und dass eine Kammer des Stellzylinders (18) mit einem Reservoir (23) über einen Hydraulikkreis verbunden ist, und dass ein Strömungswiderstand des Hydraulikkreises zwischen dem im wesentlichen ungedämpften Zustand und dem stark gedämpften Zustand entsprechenden Werten umschaltbar ist.

7. Landwirtschaftliche Maschine nach Anspruch 6, **dadurch gekennzeichnet, dass** der Stellzylinder (18) ein einfach wirkender Stellzylinder ist.

8. Landwirtschaftliche Maschine nach Anspruch 6 oder 7, **dadurch gekennzeichnet, dass** der Arm (15) ein Armglied (17) aufweist, das an einem ersten Ende an das Vorsatzgerät (2) angelenkt ist und an einem zweiten Ende eine Achse des Stützrads (16) definiert, und dass der Stellzylinder (18) an das Armglied (17) und an das Vorsatzgerät (2) angelenkt ist.

9. Landwirtschaftliche Maschine nach einem der Ansprüche 6 bis 8, **dadurch gekennzeichnet, dass** der Hydraulikkreis eine Drosselstelle und ein zu der Drosselstelle paralleles Schaltventil (26) umfasst.

10. Landwirtschaftliche nach Anspruch 9, **dadurch gekennzeichnet, dass** der Hydraulikkreis ferner ein zu der Drosselstelle paralleles Rückschlagventil (24) umfasst.

11. Landwirtschaftliche Maschine nach Anspruch 9 oder 10, **dadurch gekennzeichnet, dass** die Drosselstelle ein durch den Druck an seinem dem Stellzylinder (18) zugewandten Anschluss gesteuertes Druckregelventil (25) umfasst.

12. Landwirtschaftliche Maschine nach einem der vorhergehenden Ansprüche, **dadurch gekennzeichnet, dass** jedem Arm (15) ein Bodenabstandsmesser (19) zugeordnet ist und die Dämpfung in Abhängigkeit von einem gemessenen Bodenabstand oder einer Differenz zwischen von den Bodenabstandsmessern (19) beiderseits der Achse (21) gemessenen Bodenabständen gesteuert ist.

13. Landwirtschaftliche nach Anspruch 12, soweit auf Anspruch 9 rückbezogen, **dadurch gekennzeichnet, dass** das Schaltventil (26) im Hydraulikkreis eines der Arme (15) eingerichtet ist, bei Überschreitung eines ersten Schwellwerts des vom dem Arm (15) zugeordneten Bodenabstandsmesser (19) gemessenen Bodenabstands oder der Differenz zwischen dem vom dem Arm (15) zugeordneten Bodenabstandsmesser (19) gemessenen Bodenabstand und einem von einem Bodenabstandsmesser auf der gegenüberliegenden Seite der Achse (21) gemessenen Bodenabstand zu öffnen und bei Unterschreitung eines zweiten, niedrigeren Schwellwerts des Bodenabstands oder der Differenz zu schließen.

## Claims

1. An agricultural machine comprising a carrier vehicle (1) and a front attachment (2) which is pivotably guided on the carrier vehicle (1) about an axis (21) which extends in the direction of travel of the carrier vehicle (1), wherein, to the right and left of the axis (21), a respective support wheel (16) is connected to the front attachment (2) via a damped compressible arm (15), **characterized in that** a control circuit (27) is configured to decide whether a pivoting movement of the front attachment (2) about the axis (21) is desired or not and in the case in which the pivoting movement is desired, to switch that one of the arms (15) which is compressed by the pivoting movement out of a strongly damped compressible state into a substantially undamped state.

2. The agricultural machine according to claim 1, **characterized in that** the control circuit (27) is configured, when one of the arms (15) is compressed in the strongly damped compressible state, to treat a pivoting movement driven by this arm as a desired pivoting movement, and to switch the other arm (15) into the substantially undamped state.

3. The agricultural machine according to claim 1 or claim 2, **characterized by** an actuator (11) which engages on the carrier vehicle (1) and on the front attachment (2) in order to drive a pivoting movement between the carrier vehicle (1) and the front attachment (2) about the axis (21).

4. The agricultural machine according to claim 3, **characterized in that** the control circuit (27) is configured to treat a pivoting movement of the front attachment (2) about the axis (21) which is driven by the actuator (11) as a desired pivoting movement.

5. The agricultural machine according to one of the preceding claims, **characterized in that** the control circuit (27) is configured to switch the damping of an arm (15) during the course of a compression procedure thereof from the substantially undamped into the strongly damped state.

6. The agricultural machine according to one of the preceding claims, **characterized in that** each arm (15) comprises an actuating cylinder (18), and **in that** a chamber of the actuating cylinder (18) is connected to a reservoir (23) via a hydraulic circuit, and **in that** a flow resistance of the hydraulic circuit can be switched between the values corresponding to the substantially undamped state and to the strongly damped state.

7. The agricultural machine according to claim 6, **characterized in that** the actuating cylinder (18) is a single-acting actuating cylinder.

8. The agricultural machine according to claim 6 or claim 7, **characterized in that** the arm (15) has an arm member (17) which is articulated on the front attachment (2) at a first end and defines an axis of the support wheel (16) at a second end, and **in that** the actuating cylinder (18) is articulated on the arm member (17) and on the front attachment (2).

9. The agricultural machine according to one of claims 6 to 8, **characterized in that** the hydraulic circuit comprises a throttle point and an on/off valve (26) parallel to the throttle point.

10. The agricultural machine according to claim 9, **characterized in that** the hydraulic circuit furthermore comprises a check valve (24) parallel to the throttle point.

11. The agricultural machine according to claim 9 or claim 10, **characterized in that** the throttle point comprises a pressure regulating valve (25) which is controlled by the pressure at its connection which faces the actuating cylinder (18).

12. The agricultural machine according to one of the preceding claims, **characterized in that** each arm (15) is associated with a ground clearance meter (19) and the damping is controlled as a function of a measured ground clearance or of a difference between ground clearances measured by the ground clearance meters (19) on both sides of the axis (21).

13. The agricultural machine according to claim 12, insofar as it is dependent on claim 9, **characterized in that** the on/off valve (26) in the hydraulic circuit of one of the arms (15) is configured to open when a first threshold value of the ground clearance measured by the ground clearance meter (19) associated with the arm (15) or the difference between the ground clearance measured by the ground clearance meter (19) associated with the arm (15) and a ground clearance measured by a ground clearance meter on the opposite side of the axis (21) is exceeded and to close when a second, lower threshold value of the ground clearance or of the difference is undershot.

## Revendications

1. Machine agricole, comprenant un véhicule porteur (1) et une tête de récolte (2) qui est guidée sur le véhicule porteur (1) avec possibilité de pivotement autour d'un axe (21) s'étendant dans le sens du déplacement du véhicule porteur (1), une roue de support (16) étant reliée à la tête de récolte (2), respectivement à droite et à gauche de l'axe (21), par l'intermédiaire d'un bras (15) à compression amortie, **caractérisée en ce qu'**un circuit de commande (27) est conçu pour décider si un mouvement pivotant de la tête de récolte (2) autour de l'axe (21) est souhaité ou non, et, au cas où le mouvement pivotant est souhaité, pour commuter celui des bras (15) qui est comprimé par le mouvement pivotant, pour le faire passer d'un état permettant une compression fortement amortie, à un état sensiblement non amorti.

2. Machine agricole selon la revendication 1, **caractérisée en ce que** le circuit de commande (27) est conçu pour que, si l'un des bras (15) est comprimé à l'état permettant une compression fortement amortie, un mouvement pivotant entraîné par ce bras soit traité en tant que mouvement pivotant souhaité pour commuter l'autre bras (15) à l'état sensiblement non amorti.

3. Machine agricole selon la revendication 1 ou 2, **caractérisée en ce qu'**elle comporte un organe d'actionnement (11) qui est en prise sur le véhicule porteur (1) et la tête de récolte (2), en vue d'entraîner un mouvement pivotant autour de l'axe (21), entre le véhicule porteur (1) et la tête de récolte (2).

4. Machine agricole selon la revendication 3, **caractérisée en ce que** le circuit de commande (27) est conçu pour traiter en tant que mouvement pivotant souhaité, un mouvement pivotant de la tête de récolte (2) entraîné par l'organe d'actionnement (11) autour de l'axe (21).

5. Machine agricole selon une des revendications précédentes, **caractérisée en ce que** le circuit de commande (27) est conçu pour commuter l'amortissement d'un bras (15), au cours d'une opération de compression de celui-ci, de l'état sensiblement non amorti à l'état fortement amorti.

6. Machine agricole selon une des revendications précédentes, **caractérisée en ce que** chaque bras (15) comprend un vérin d'actionnement (18), et **en ce qu'**une chambre du vérin d'actionnement (18) est reliée à un réservoir (23) par l'intermédiaire d'un circuit hydraulique, et **en ce qu'**une résistance à l'écoulement du circuit hydraulique peut être commutée entre des valeurs correspondant à l'état sensiblement non amorti et à l'état fortement amorti.

7. Machine agricole selon la revendication 6, **caractérisée en ce que** le vérin d'actionnement (18) est un vérin d'actionnement à simple effet.

8. Machine agricole selon la revendication 6 ou 7, **caractérisée en ce que** le bras (15) présente un segment de bras (17) qui est articulé par une première extrémité sur la tête de récolte (2) et définit à une deuxième extrémité un axe de la roue de support (16), et **en ce que** le vérin d'actionnement (18) est articulé sur le segment de bras (17) et sur la tête de récolte (2).

9. Machine agricole selon une des revendications 6 à 8, **caractérisée en ce que** le circuit hydraulique comprend un point d'étranglement et une valve de commutation (26) qui est parallèle au point d'étranglement.

10. Agricole selon la revendication 9, **caractérisée en ce que** le circuit hydraulique comprend en outre un clapet de non-retour (24) qui est parallèle au point d'étranglement.

11. Machine agricole selon la revendication 9 ou 10, **caractérisée en ce que** le point d'étranglement comprend un clapet de réglage de pression (25) qui est commandé par la pression sur son raccord tourné vers le vérin d'actionnement (18).

12. Machine agricole selon une des revendications précédentes, **caractérisée en ce qu'**un capteur de distance du sol (19) est associé à chaque bras (15), et l'amortissement est commandé en fonction d'une distance du sol mesurée ou d'une différence entre des distances du sol mesurées entre des capteurs de distance du sol (19) de part et d'autre de l'axe (21).

13. Machine agricole selon la revendication 12 dans la mesure
où elle fait référence à la revendication 9, **caractérisée en ce que** la valve de commutation (26) dans le circuit hydraulique de l'un des bras (15) est conçue pour s'ouvrir en cas de dépassement d'une première valeur seuil de la distance du sol mesurée par le capteur de distance du sol (19) associé au bras (15) ou de la différence entre la distance du sol mesurée par le capteur de distance du sol (19) associé au bras (15) et une distance du sol mesurée par un capteur de distance du sol sur le côté opposé de l'axe (21), et pour se fermer en cas de passage en dessous d'une deuxième valeur seuil, plus faible, de la distance du sol ou de la différence.
